(19) Europäisches Patentamt
European Patent Office
Office européen des brevets

(11) EP 2 283 751 A1

(12) # DEMANDE DE BREVET EUROPEEN

(43) Date de publication:
**16.02.2011 Bulletin 2011/07**

(51) Int Cl.:
***A47F 7/28*** *(2006.01)*

(21) Numéro de dépôt: **10172283.3**

(22) Date de dépôt: **09.08.2010**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(30) Priorité: **10.08.2009 CH 12412009**

(71) Demandeur: **Rustamov, Ilgar**
**1292 Chambésy (CH)**

(72) Inventeur: **Rustamov, Ilgar**
**1292 Chambésy (CH)**

(74) Mandataire: **Ganguillet, Cyril**
**ABREMA**
**Agence Brevets & Marques Ganguillet**
**Avenue du Théâtre 16**
**P.O. Box 5027**
**1002 Lausanne (CH)**

(54) **Dispositif de stockage de capsules pour la préparation de boissons**

(57) L'invention concerne un dispositif de stockage (10) de capsules (20) pour la préparation de boissons, notamment de café, lesdites capsules (20) étant munies à l'une de leurs extrémités d'un rebord (21) sensiblement circulaire de diamètre D, ledit dispositif (10) comprenant un bâti (1) sur lequel sont formés une série de logements de réception (2) disposés selon des rangées paralléles et destinés à recevoir lesdites capsules (20), **caractérisé en ce que** chacun desdits logements (2) comporte une face arrière (3), une face inférieure (5), une face supérieure (6) et deux bordures avant, l'une inférieure (7) et l'autre supérieure (8), séparées par une ouverture centrale (Ω), les extrémités desdites bordures inférieure (7) et supérieure (8) étant séparées par une distance d1 dans le plan défini par l'ouverture centrale (Ω), d1 étant strictement inférieure à D de manière à empêcher le passage du rebord (21) d'une capsule (20) par l'ouverture centrale (Ω) lorsque le plan défini par le rebord (21) de la capsule (20) est parallèle au plan défini par l'ouverture centrale (Ω) et en ce que la face inférieure (5) et la face supérieure (6) sont séparées par une distance d2 dans le plan défini par l'ouverture centrale (Ω), d2 étant strictement supérieure à D de manière à permettre le passage du rebord (21) de la capsule (20) par l'ouverture centrale (Ω) lorsque le plan défini par le rebord (21) de la capsule (20) est incliné par rapport au plan défini par l'ouverture centrale (Ω).

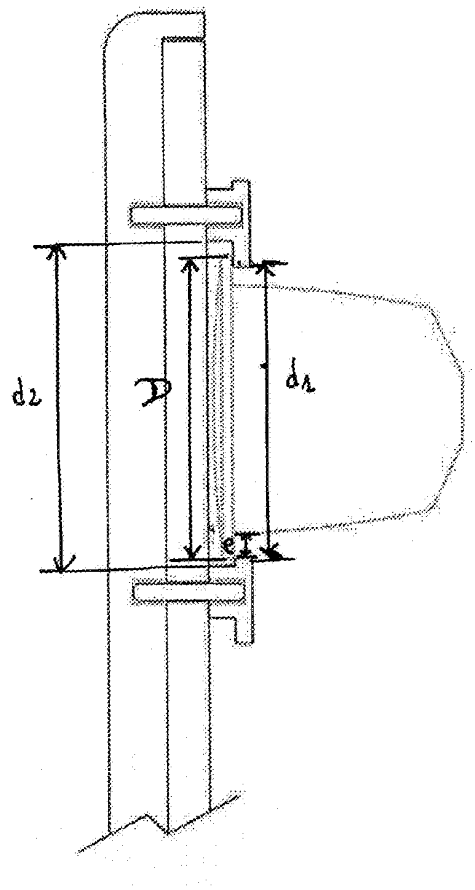


**Fig. 2a**

EP 2 283 751 A1

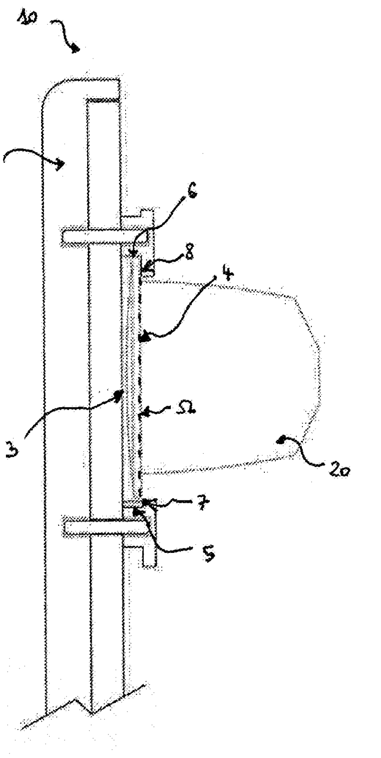


Fig. 2b

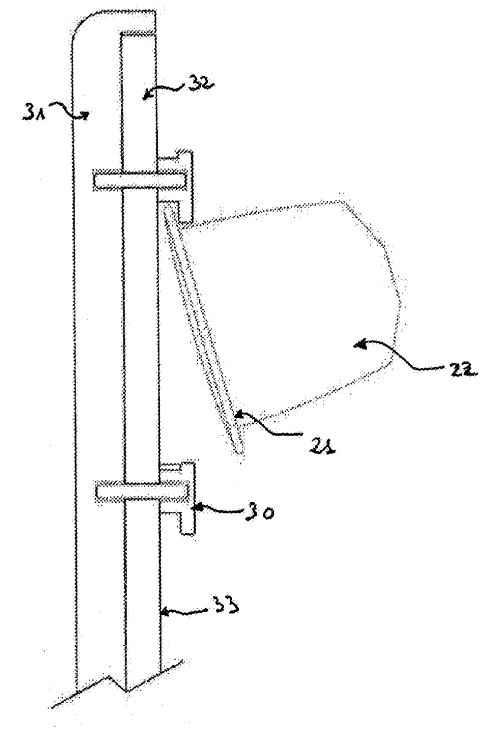


Fig. 2b

## Description

### Domaine technique

La présente invention se rapporte à un dispositif de stockage de capsules pour la préparation de boissons, notamment de café.

L'invention vise en particulier un dispositif de stockage de capsules dans lequel les capsules sont disposées sur un présentoir vertical ou légèrement oblique et peuvent être positionnées à l'intérieur ou retirées du présentoir de manière individuelle.

### Etat de la technique

Dans le domaine alimentaire, l'utilisation d'appareils de préparation de boissons, notamment de café, à partir de capsules est en pleine expansion. Ces appareils fonctionnent en utilisant des capsules contenant une préparation sous la forme d'une poudre ou de granulés qui, sous l'action de l'eau généralement sous pression, forme la boisson désirée.

Les capsules utilisées dans ces appareils se présentent généralement sous la forme d'un corps étanche ayant la forme générale d'un tronc de cône comportant un rebord à sa base et une membrane fermant la base.

De telles capsules ont notamment été décrites dans les demandes de brevet CH-605293 et EP-0512148A1.

Du fait de la simplicité et de la rapidité d'utilisation de ce type d'appareils, les utilisateurs ont tendance à accroître leur consommation quotidienne de capsules. Il devient alors nécessaire de disposer d'une réserve suffisante en capsules afin d'éviter la rupture de stock. Cette réserve de capsules est parfois mise à la disposition des utilisateurs sous la forme d'un magasin unique dans lequel les capsules sont stockées en vrac. Cette solution n'est toutefois pas satisfaisante si le magasin doit contenir plusieurs sortes de capsules. En effet, les capsules peuvent contenir des préparations différentes selon la boisson désirée par l'utilisateur. Dans ce cas, chaque capsule possède une couleur spécifique correspondant à la préparation qu'elle contient. De ce fait, lorsque les capsules de différentes couleurs sont mélangées ensemble et en vrac dans un magasin unique, les utilisateurs ont souvent des difficultés pour trouver rapidement la capsule de couleur qu'ils recherchent. En outre, cette disposition est généralement peu esthétique.

Diverses solutions ont été proposées dans l'art antérieur pour résoudre ce problème.

Une solution consiste notamment à disposer les capsules dans une boîte rectangulaire posée à plat, sur une table par exemple, les capsules étant positionnées dans la boîte à l'intérieur de logements individuels, généralement selon un alignement régulier de lignes et de colonnes. Les logements individuels sont généralement assimilables à des cylindres de révolution, la base du cylindre ayant des dimensions légèrement supérieures à celles du rebord des capsules de manière à permettre l'introduction et le calage des capsules à l'intérieur des logements. Toutefois, cette solution n'est pas satisfaisante du fait que les capsules, n'étant pas maintenues à l'intérieur des logements, risquent, à chaque déplacement de la boîte, de quitter leur logement et de chuter à terre. Par ailleurs, cette solution ne permet pas de disposer les capsules selon un alignement vertical ou oblique, c'est-à-dire dans une position où la base du tronc de cône est orientée verticalement ou de manière oblique. Ce positionnement vertical ou oblique présente en effet l'avantage de faciliter la visualisation des capsules par un grand nombre de personnes en même temps. En outre, dans cette position, l'agencement global des capsules de différentes couleurs dans le présentoir produit en général un effet esthétique particulièrement attrayant.

On connaît par ailleurs dans l'art antérieur des magasins de capsules permettant de stocker les capsules selon des empilements verticaux de capsules. De tels magasins ont notamment été décrits dans le brevet américain US 6,595,106 ou dans le modèle d'utilité allemand DE 20 2006 019 221 U1. Toutefois, les magasins décrits dans ces documents antérieurs présentent le désavantage de ne permettre l'insertion, respectivement le retrait, des capsules que depuis le haut, respectivement le bas, d'une colonne dans laquelle sont empilées plusieurs capsules. Il n'est donc pas possible de retirer ou d'insérer une capsule au milieu d'une colonne déjà formée. Pour faciliter l'utilisation de ce type de magasins, il est donc nécessaire de ne disposer qu'une seule sorte de capsules dans un même empilement et de prévoir autant d'empilements que de sortes de capsules à stocker. Ces magasins s'avèrent donc relativement contraignants lors de leur utilisation. En outre, le retrait d'une capsule dans le bas d'une colonne provoquant inévitablement le déplacement concomitant des capsules situées au-dessus d'elle, la disposition globale des capsules au sein du magasin est sans cesse modifiée. Il n'est donc pas possible de choisir spécifiquement la position individuelle des capsules de couleur au sein de l'arrangement de manière à créer un effet visuel particulier visible lorsque l'on regarde le magasin dans son ensemble. Un tel effet visuel peut notamment consister en l'affichage d'une lettre ou d'un signe graphique d'une certaine couleur sur un fond d'une autre couleur. Les possibilités d'améliorer l'esthétique de ces magasins sont donc également limitées.

### Divulgation de l'invention

L'objet de la présente invention est donc de proposer un dispositif amélioré de stockage de capsules, ne présentant pas les inconvénients des solutions exposées ci-dessus.

A cet effet, conformément à l'invention, il est proposé un dispositif de stockage de capsules pour la préparation de boissons, notamment de café, lesdites capsules étant munies à l'une de leurs extrémités d'un rebord sensiblement circulaire de diamètre D, ledit dispositif comprenant un bâti sur lequel sont formés une série de logements de réception disposés selon des rangées parallèles et destinés à recevoir lesdites capsules, **caractérisé en ce que** chacun desdits logements comporte une face arrière, une face inférieure, une face supérieure et deux bordures avant, l'une inférieure et l'autre supérieure, séparées par une ouverture centrale, les extrémités desdites bordures inférieure et supérieure étant séparées par une distance d1 dans le plan défini par l'ouverture centrale, d1 étant strictement inférieure à D de manière à empêcher le passage du rebord d'une capsule par l'ouverture centrale lorsque le plan défini par le rebord de la capsule est parallèle au plan défini par l'ouverture centrale et en ce que la face inférieure et la face supérieure sont séparées par une distance d2 dans le plan défini par l'ouverture centrale, d2 étant strictement supérieure à D de manière à permettre le passage du rebord de la capsule par l'ouverture centrale lorsque le plan défini par le rebord de la capsule est incliné par rapport au plan défini par l'ouverture centrale.

D'autres configurations possibles du dispositif de la présente invention sont définies dans les revendications 2 à 12.

Ainsi configuré, le dispositif de stockage de capsules de la présente invention permet de disposer des capsules dans des logements de réception formés sur le bâti. Les capsules sont maintenues à l'intérieur des logements par leur rebord circulaire en saillie qui vient buter contre les bordures en saillie disposées à l'avant des logements. Le risque d'une sortie prématurée des capsules est ainsi évité. Par ailleurs, le bâti, jouant le rôle de présentoir, peut être incliné par rapport à l'horizontal ou être suspendu à un mur sans que les capsules sortent de leur logement.

En outre, le retrait d'une capsule de son logement respectif se fait simplement en positionnant de manière oblique la capsule par rapport à l'ouverture centrale du logement. Cette position oblique de la capsule est réalisable du fait que la hauteur du logement est légèrement supérieure au diamètre du rebord de la capsule. Comme expliqué plus en détail par la suite, en repoussant le rebord de la capsule vers le haut du logement, la partie basse du rebord de la capsule ne bute plus contre la bordure inférieure de la face avant du logement. Il suffit ensuite d'incliner le rebord de la capsule pour faire passer la partie basse du rebord de la capsule à travers l'ouverture centrale du logement et, une fois la partie basse du rebord totalement sortie du logement, de déplacer le rebord vers le bas pour libérer totalement la capsule de son logement. Cette configuration particulière des logements permet donc un retrait individuel de chaque capsule quelle que soit sa position à l'intérieur du dispositif de stockage et sans nécessiter le déplacement concomitant d'autres capsules. Il est bien entendu évident qu'en effectuant en sens inverse les opérations précédemment décrites, la solution de la présente invention permet également un positionnement individualisé de chaque capsule à l'intérieur du dispositif. Il est donc possible de créer un agencement spécifique des capsules à l'intérieur du dispositif de manière à créer un effet visuel particulier.

Brève description des dessins

D'autres avantages et caractéristiques de la présente invention seront mieux compris à la lecture d'un mode particulier de réalisation de l'invention et en référence aux dessins dans lesquels:

- la figure 1 représente une vue frontale d'un dispositif de stockage selon l'invention;
- les figures 2a, 2b et 2c représentent une vue latérale agrandie d'un détail de construction du dispositif représenté à la figure 1, dans laquelle ont été représentées les positions successives d'une capsule au moment de son retrait;
- la figure 3 représente une vue arrière et en perspective du dispositif de stockage de la figure 1 muni d'un pied-support vertical;
- la figure 4 représente une vue arrière et en perspective du dispositif de stockage de la figure 1 muni d'un pied-support oblique.

Description détaillée d'un mode d'exécution de l'invention

En référence à la figure 1 et aux figures 2a à 2c, il est représenté un dispositif de stockage conforme à l'invention. Ce dispositif de stockage 10 est formé d'un bâti 1 de forme générale carrée. Ce bâti 1 pourra être formé d'une plaque unique ou de l'assemblage de deux plaques 31 et 32 (voir figure 2c) de manière à définir une surface de fond 33 sensiblement plane. Sur le bâti 1 sont fixées une série de barrettes 30 en forme de T, la base du T étant en contact avec la surface de fond 33. Les barrettes 30 seront sensiblement parallèles entre elles, et de préférence équidistantes l'une de l'autre, de manière à définir une série de rangées parallèles. Deux barrettes contiguës 30 forment ainsi, avec la surface plane 33 du bâti 1, un logement de réception 2 pour une capsule 20. Ces logements 2 s'étendront sensiblement sur toute la largeur du bâti 1 et comporteront selon le cas des extrémités latérales 9 et 9' ouvertes ou fermées de manière à permettre ou pas l'introduction ou la sortie des capsules 20 sur leurs côtés respectifs. Chacun des logements 2 comporte une face arrière 3, une face avant 4, une face inférieure 5 et une face supérieure 6 (voir figure 2b). La face arrière 3 correspond en fait à la surface plane 33 du bâti 1 et les faces inférieure 5 et supérieure 6, sensiblement parallèles entre elles, sont définies par les côtés des barrettes 20 débouchant sur la base du T. La face avant 4 est définie quant à elle par une ouverture centrale $\Omega$ (représentée en traits discontinus sur la figure 2b) entourée par une bordure inférieure 7 et une bordure supérieure 8, lesdites bordures étant sensiblement parallèles entre elles. La bordure inférieure 7, respectivement supérieure 8, est définie partiellement par la barre transversale du T formée par la barrette 20 située au-dessous, respectivement au-dessus, du logement 2. Les dimensions respectives de ce logement 2 seront choisies pour permettre une introduction, ou un retrait, facilité d'une capsule 20 à l'intérieur, ou hors, du logement 2, tout en évitant une sortie prématurée de ladite capsule 20. Même si, dans la configuration représentée, les bordures inférieure 7 et supérieure 8 sont sensiblement alignées dans un plan parallèle à la surface plane 33 du bâti 1, il est évident qu'il sera également envisageable de disposer les bordures 7 et 8 de manière oblique par rapport à ladite surface plane 33.

Tel que représenté sur la figure 2c, une capsule 20 destinée à être stockée à l'intérieur du dispositif 10 de la présente invention comporte généralement un corps 22 ayant une forme générale de tronc de cône, prolongé à sa base par un rebord 21 sensiblement circulaire. Ce rebord 21 forme donc une partie en saillie pour la capsule 20. Dans la configuration représentée, cette partie en saillie s'étend à la base du corps 22 de la capsule 20 selon un anneau circulaire de largeur e (voir figure 2a).

En référence à la figure 2a, on constate que la distance d1 séparant la bordure inférieure 7 de la bordure supérieure 8 est strictement supérieure au diamètre D du rebord 21 de la capsule 20 et que la distance d2 séparant la face inférieure 5 de la face supérieure 6 est strictement supérieure à ce diamètre D. Ainsi, dans la position représentée sur la figure 2a, correspondant à la position normale de stockage d'une capsule 20 à l'intérieur du dispositif 10, le rebord 21 de la capsule 20 bute contre les bordures inférieure 7 et supérieure 8 de la face avant 4 du logement 2. Dans cette position, le plan formé par le rebord 21 est sensiblement parallèle au plan défini par la face avant 4. En outre, la partie basse du rebord 21 repose sensiblement sur la face inférieure 5 du logement 2, tandis qu'un espace libre sépare la partie haute du rebord 21 de la face supérieure 6. Par ailleurs, pour garantir un maintien suffisant des capsules 20 dans cette position de stockage, notamment lors des déplacements du dispositif de stockage 10, il sera utile de limiter au maximum les possibilités de mouvement latéral du rebord 21 à l'intérieur du logement 2. Ceci pourra notamment être obtenu en ajustant la hauteur du logement, c'est-à-dire la distance entre la face arrière 3 et la face avant 4, à la hauteur du rebord 21. Cet ajustement ne devrait toutefois pas empêcher les mouvements de la capsule 20 de la face inférieure 5 vers la face supérieure 6 et inversement.

Pour effectuer un retrait de la capsule 20, il suffit donc de soulever la capsule 20 de manière à ce que le rebord 21 ne bute plus contre la bordure inférieure 7 (voir figure 2b). Ce soulèvement est possible du fait de l'espace libre ménagé entre la partie haute du rebord 21 et la face supérieure 6 du logement 2. Dans la configuration représentée, ce soulèvement est toutefois limitée par la largeur e de l'anneau formé par le rebord 21 à la base du corps 22 de la capsule 20. Ainsi, la capsule 20 sera soulevée jusqu'à ce que le corps 22 de la capsule 20 bute contre la bordure supérieure 8. Dans cette position, la partie du rebord 21 située sous la bordure supérieure 8 possède une largeur (D-e). On comprend donc que, pour libérer la partie basse du rebord 21, il est nécessaire que d1 soit strictement supérieure à cette largeur (D-e). Une fois la partie basse du rebord 21 libérée, il suffit d'incliner la capsule 20 vers le haut, notamment en faisant pivoter la capsule 20 autour du point de contact du corps 22 avec la bordure supérieure 8. Le rebord 21 passe donc à travers l'ouverture centrale Ω de la face avant 4, au moins dans sa partie basse. Dans cette position, le plan formé par le rebord 21 est incliné par rapport au plan défini par la face avant 4. Pour sortir totalement la capsule 20 du logement 2, il ne reste plus qu'à déplacer la capsule 20 vers le bas jusqu'à ce que la partie haute du rebord 21 franchisse à son tour l'ouverture centrale Ω.

En effectuant les opérations dans l'autre sens, il est donc facile d'obtenir de la même façon une introduction facilitée d'une capsule 20 à l'intérieur d'un logement 2.

Par ailleurs, pour faciliter le positionnement des capsules 20 à l'intérieur des logements de réception 2, il sera avantageux de former sur la face inférieure 5 desdits logements 2 des creux 11 possédant au moins partiellement une forme complémentaire à celles des rebords 21 des capsules, chaque creux 11 étant destiné à recevoir la partie basse du rebord 21 d'une capsule 20 (voir figure 1). Ces creux 11 pourront par exemple présenter une forme cylindrique à base semi-circulaire. Ils seront, de préférence, positionnés de manière régulière le long de la face inférieure 5, les creux 11 formés dans un des logements 2 étant notamment alignés avec les creux 11' formés dans un autre logement 2. Dans la configuration représentée sur la figure 1, les creux 11 des différents logements 2 sont alignés entre eux de manière à former des alignements en colonne perpendiculairement aux rangées définies par les logements 2.

En référence aux figures 3 et 4, il est représenté deux variantes possibles du dispositif de stockage de la présente invention.

Dans la variante représentée sur la figure 3, un support 12 est fixé sur la face arrière 13 du bâti 1. Ce support 12 possède une forme générale de T inversée, la partie verticale du T étant fixée au bâti 1 et la partie horizontale du T reposant sur une surface plane. Dans cette configuration, le bâti 1 est sensiblement vertical.

Dans la variante représentée sur la figure 4, un support 14 est fixé également sur la face arrière 13 du bâti 1. Ce support 14 se présente sous la forme d'un élément coudé comportant un premier segment 15 sensiblement plat fixé à la face arrière 13 du bâti 1 et un second segment 16 sensiblement plat faisant un angle avec le premier segment 15 et reposant par son bord inférieur sur une surface plane. Dans cette configuration, le bâti 1 repose lui-même sur la surface plane de façon à se positionner de manière oblique par rapport à la verticale.

Finalement, dans une variante non représentée, il est envisageable d'équiper le bâti 1 d'un moyen de suspension, tel qu'un anneau ou un crochet, de manière à pouvoir suspendre le bâti 1 à un mur.

## Revendications

1. Dispositif de stockage (10) de capsules (20) pour la préparation de boissons, notamment de café, lesdites capsules (20) étant munies à l'une de leurs extrémités d'un rebord (21) sensiblement circulaire de diamètre D, ledit dispositif (10) comprenant un bâti (1) sur lequel sont formés une série de logements de réception (2) disposés selon des rangées parallèles et destinés à recevoir lesdites capsules (20), **caractérisé en ce que** chacun desdits logements (2) comporte une face arrière (3), une face inférieure (5), une face supérieure (6) et deux bordures avant, l'une inférieure (7) et l'autre supérieure (8), séparées par une ouverture centrale (Ω), les extrémités desdites bordures inférieure (7) et supérieure (8) étant séparées par une distance d1 dans le plan défini par l'ouverture centrale (Ω), d1 étant strictement inférieure à D de manière à empêcher le passage du rebord (21) d'une capsule (20) par l'ouverture centrale (Ω) lorsque le plan défini par le rebord (21) de la capsule (20) est parallèle au plan défini par l'ouverture centrale (Ω) et **en ce que** la face inférieure (5) et la face supérieure (6) sont séparées par une distance d2 dans le plan défini par l'ouverture centrale (Ω), d2 étant strictement supérieure à D de manière à permettre le passage du rebord (21) de la capsule (20) par l'ouverture centrale (Ω) lorsque le plan défini par le rebord (21) de la capsule (20) est incliné par rapport au plan défini par l'ouverture centrale (Ω).

2. Dispositif (10) selon la revendication 1, **caractérisé en ce que** le rebord (21) de la capsule (20) bute contre les bordures inférieure (7) et supérieure (8) lorsque la partie basse du rebord (21) repose sur la face inférieure (5) de sorte que, pour permettre le passage du rebord (21) par l'ouverture centrale (Ω), le rebord (21) est successivement déplacé de la face inférieure (5) vers la face supérieure (6) et incliné par rapport au plan défini par l'ouverture centrale (Ω).

3. Dispositif (10) selon la revendication 1 ou la revendication 2, **caractérisé en ce que**, lorsque le rebord (21) de la capsule (20) forme à la base du corps (22) de la capsule (20) un anneau circulaire en saillie de largeur e, la distance d1 est choisie de manière à remplir la condition suivante:

$$d1>D-e.$$

4. Dispositif (10) selon l'une quelconque des revendications précédentes, **caractérisé en ce que** les logements de réception (2) possèdent au moins une extrémité latérale (9, 9') ouverte de manière à permettre l'introduction ou la sortie des capsules (20) sur le côté desdits logements (2).

5. Dispositif (10) selon l'une quelconque des revendications précédentes, **caractérisé en ce que** la face inférieure (5) des logements de réception (2) est munie d'une série de creux (11,11') possédant au moins partiellement une forme complémentaire à celle des rebords (21) des capsules (20) de manière à faciliter le positionnement des capsules (20) à l'intérieur des logements (2).

6. Dispositif (10) selon la revendication précédente, **caractérisé en ce que** les creux (11,11') sont disposés de manière régulière le long de la face inférieure (5).

7. Dispositif (10) selon l'une quelconque des revendications 5 ou 6, **caractérisé en ce que** les creux (11) formés dans un des logements (2) sont alignés avec les creux (11') formés dans un autre logement (2).

8. Dispositif (10) selon la revendication précédente, **caractérisé en ce que** les creux (11,11') des différents logements (2) sont alignés entre eux selon des colonnes perpendiculaires aux rangées définies par les logements.

9. Dispositif (10) selon l'une quelconque des revendications précédentes, **caractérisé en ce que** le bâti (1) est muni d'un moyen de suspension de manière à permettre sa suspension à un mur.

10. Dispositif (10) selon l'une quelconque des revendications précédentes, **caractérisé en ce que** le bâti (1) est fixé sur un support (12) de manière à être posé sur une surface plane en position verticale.

11. Dispositif (10) selon l'une quelconque des revendications 1 à 9, **caractérisé en ce que** le bâti (1) est fixé sur un support (14) de manière à être posé sur une surface plane en position oblique.

12. Dispositif (10) selon la revendication précédente, **caractérisé en ce que** le support (14) sur lequel est fixé le bâti (1) est formé d'un élément coudé comportant un premier segment (15) fixé à une face arrière (13) du bâti (1) et un second segment (16) faisant un angle avec le premier segment (15).

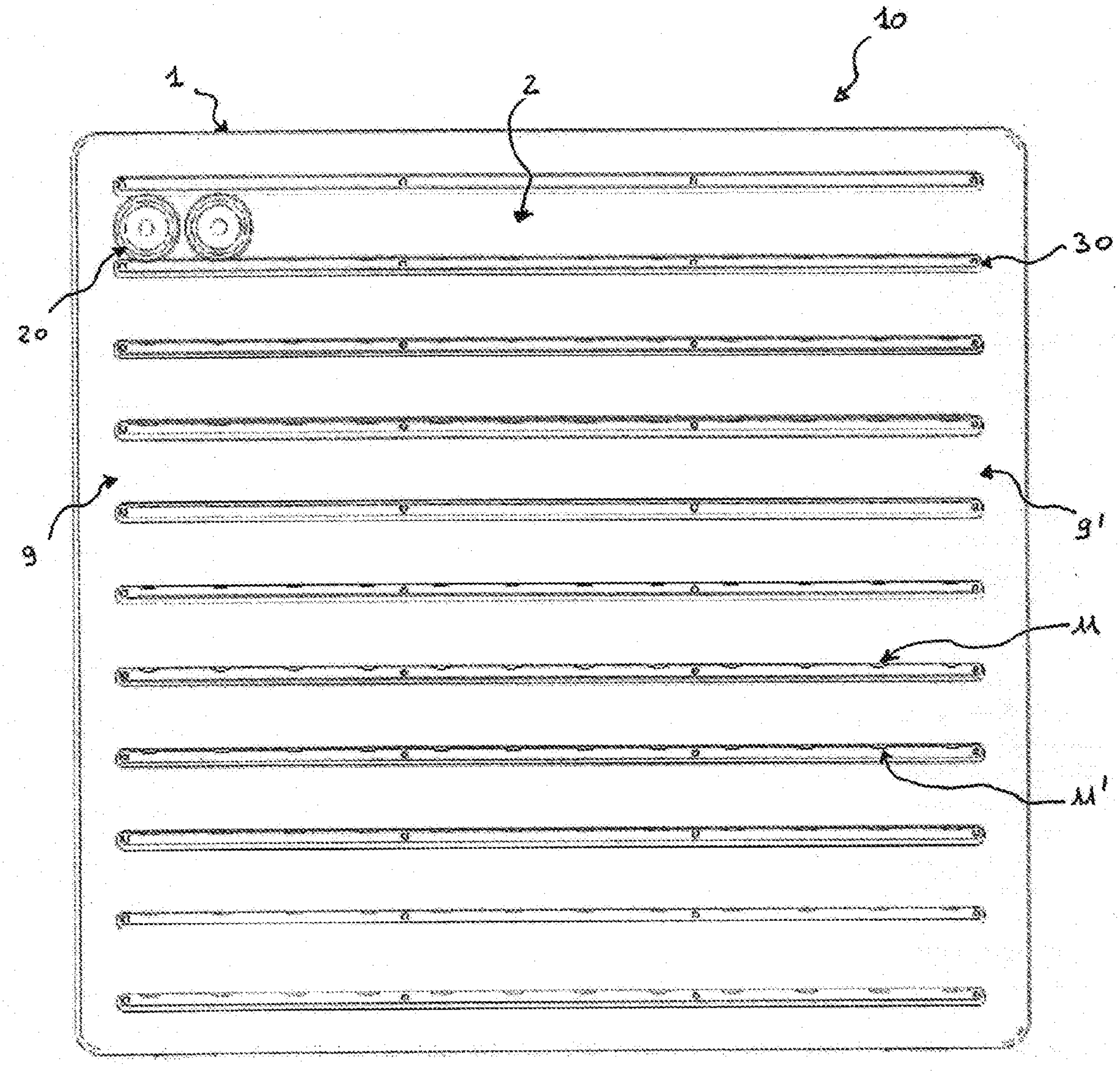


Fig. 1

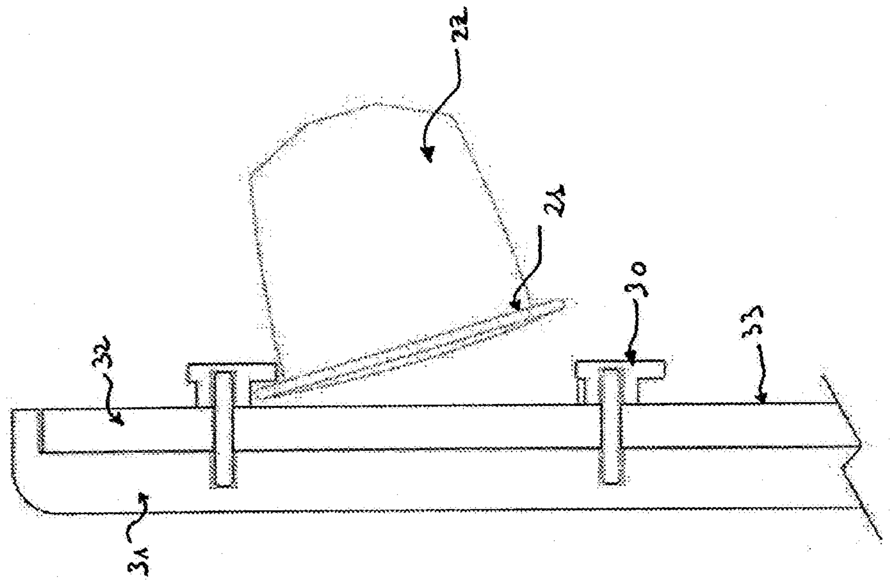


Fig. 2b

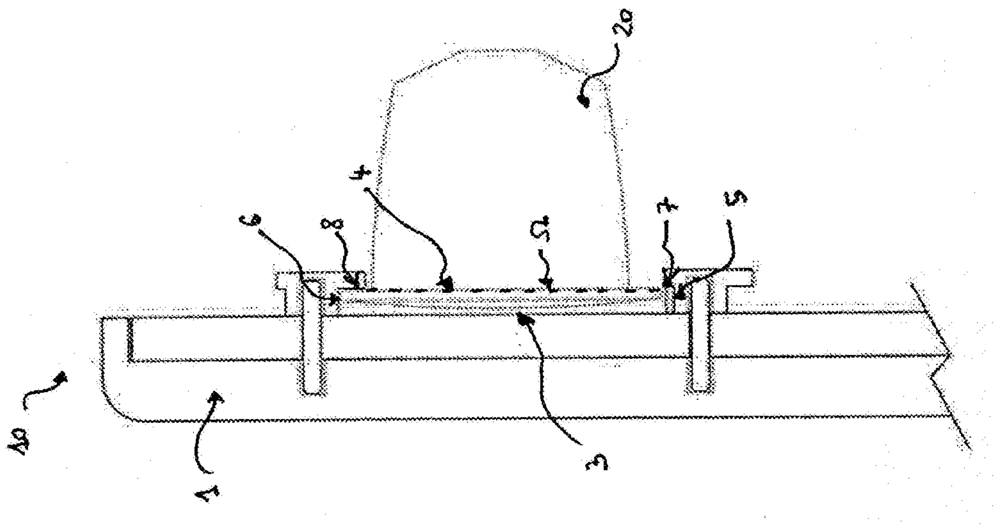


Fig. 2b

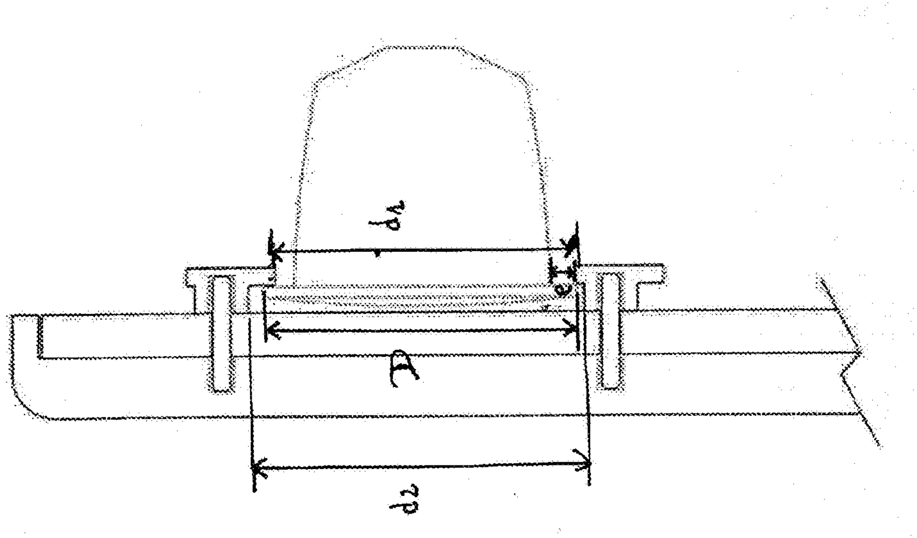


Fig. 2a

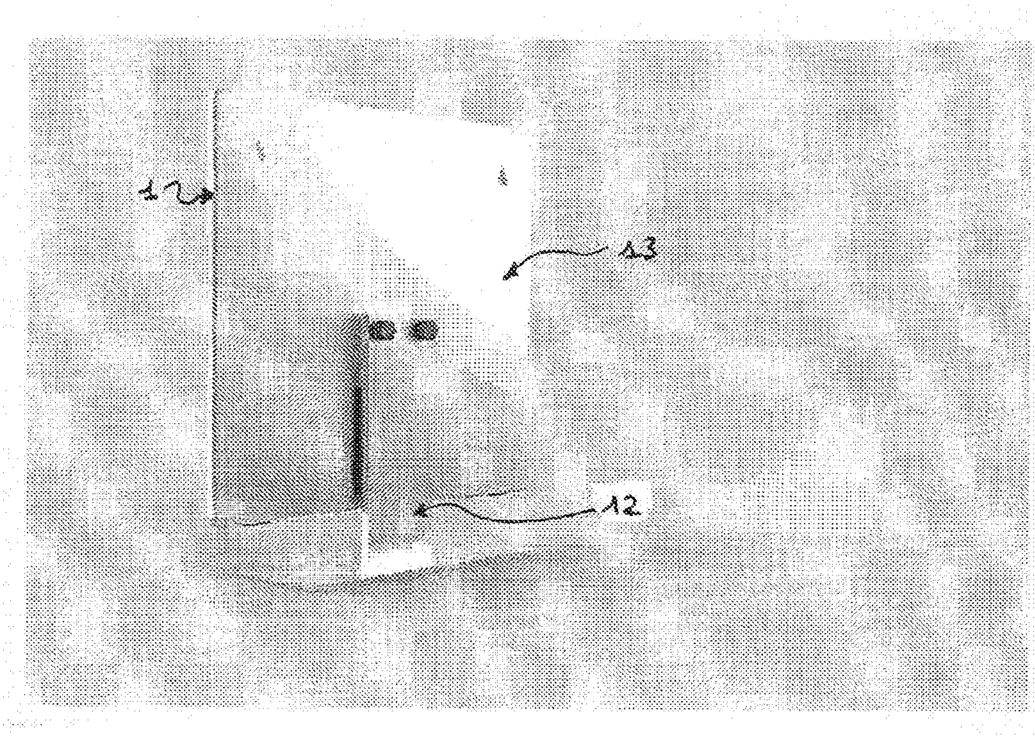


Fig. 3

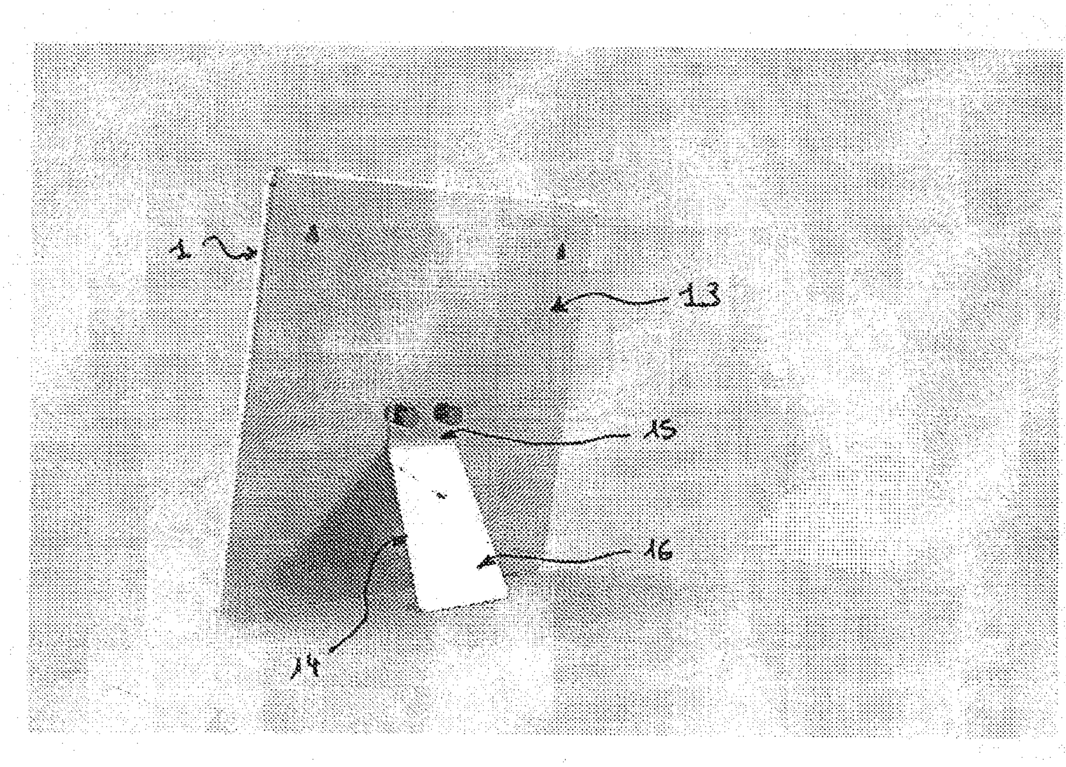


Fig. 4

Europäisches Patentamt
European Patent Office
Office européen des brevets

# RAPPORT DE RECHERCHE EUROPEENNE

Numéro de la demande
EP 10 17 2283

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Anonymous: "Nespresso capsule dispenser" The People's Republic of Fub<br><br>24 juin 2009 (2009-06-24), XP002604732<br>Extrait de l'Internet:<br>URL:http://fub.livejournal.com/615797.html<br>[extrait le 2010-10-12] | 1-4,9-12 | INV.<br>A47F7/28 |
| Y | * le document en entier *<br>----- | 5-8 | |
| Y | DE 20 2005 015322 U1 (KALETH)<br>22 décembre 2005 (2005-12-22)<br>* le document en entier *<br>----- | 5-8 | |
| E | CH 700 345 B1 (FISCHLI)<br>13 août 2010 (2010-08-13)<br>* le document en entier *<br>----- | 1-4 | |

DOMAINES TECHNIQUES RECHERCHES (IPC)

A47F
A47J

Le présent rapport a été établi pour toutes les revendications

| Lieu de la recherche | Date d'achèvement de la recherche | Examinateur |
|---|---|---|
| La Haye | 13 octobre 2010 | Jacquemin, Martin |

2

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 10 17 2283

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-10-2010

| Document brevet cité au rapport de recherche | Date de publication | Membre(s) de la famille de brevet(s) | Date de publication |
|---|---|---|---|
| DE 202005015322 U1 | 22-12-2005 | AUCUN | |
| CH 700345 B1 | 13-08-2010 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- CH 605293
- EP 0512148 A1
- US 6595106 B
- DE 202006019221 U1